# EUROPEAN PATENT APPLICATION

(11) **EP 4 270 242 A1**
(43) Date of publication of application: **01.11.2023**
(21) Application number: 21909440.6
(22) Date of filing: 22.12.2021
(51) Int. Cl.: G06K 9/00, A01D 34/00

(54) **OBSTACLE RECOGNITION METHOD, APPARATUS, DEVICE, MEDIUM AND WEEDING ROBOT**

(30) Priority: 24.12.2020 CN 202011553905
(71) Applicant: Suzhou Cleva Precision Machinery & Technology Co., Ltd., Suzhou, Jiangsu 215000 (CN); Skybest Electric Appliance (Suzhou) Co., Ltd., Suzhou, Jiangsu 215000 (CN)
(72) Inventor: ZHU, Shaoming, Suzhou, Jiangsu 215000 (CN); REN, Xue, Suzhou, Jiangsu 215000 (CN)
(74) Representative: Murgitroyd & Company
(86) International application number: PCT/CN2021/140316
(87) International publication number: WO 2022/135444

(57) **Abstract**

Embodiments of the present invention disclose an obstacle recognition method and apparatus, a device, a medium, and a weeding robot. The method includes: obtaining hue information, a number of exposed state pixels, and a number of non-exposed state white pixels of a candidate weeding region image; obtaining a hue value of a sudden change peak point; determining target pixel position information, target pixel value information, and a quantity of hue valid pixels; and determining whether there is an exposed region according to the above information. Technical solutions provided in the embodiments of the present invention can solve problems that a lot of manpower and material resources are consumed and costs are increased because boundaries of weeding regions of weeding robots are generally calibrated by burying boundary lines in existing technologies, In addition, a problem that the shape of a weeding region is limited to some extent due to limitations on the burying of the boundary lines is solved, and recognition efficiency and accuracy of obstacles in a candidate weeding region of a weeding robot are improved.

## Description

### Technical Field

Embodiments of the present invention relate to a computer technology, in particular to an obstacle recognition method and apparatus, a device, a medium, and a weeding robot.

### Background

With the improvement of living standards, people increasingly concern environmental construction, so the construction of urban green gardens receives increasing attention. Meanwhile, efficient green maintenance, such as daily weeding, has gradually become a demand. However, because conventional weeding machines need manual control, weeding robots with autonomous working functions are gradually emerging.

In existing technologies, boundaries of weeding regions of weeding robots are generally calibrated by burying boundary lines, which consumes a lot of manpower and material resources and increases costs. In addition, the burying of the boundary lines is limited, for example, corners cannot be less than 90 degrees, so the shape of a weeding region is limited to some extent.

### Summary

Embodiments of the present invention provide an obstacle recognition method and apparatus, a device, a medium, and a weeding robot to improve recognition efficiency and accuracy of obstacles in a candidate weeding region of the weeding robot.

In a first aspect, an embodiment of the present invention provides an obstacle recognition method, the method including:
obtaining hue information, a number of exposed state pixels, and a number of non-exposed state white pixels of a candidate weeding region image;
generating a hue histogram of the candidate weeding region image according to the hue information, and obtaining peak information of the hue histogram, where the peak information includes: a hue value of a sudden change peak point and a peak value of the sudden change peak point;
determining target pixel position information and target pixel value information of the candidate weeding region image according to the hue value of the sudden change peak point;
determining a quantity of hue valid pixels in a preset hue interval in the candidate weeding region image; and
determining whether there is an exposed region in the candidate weeding region image according to the number of exposed state pixels, the number of non-exposed state white pixels, the peak value of the sudden change peak point, the target pixel position information, the target pixel value information, and the quantity of hue valid pixels, to determine whether there is an obstacle in the candidate weeding region image.

In a second aspect, an embodiment of the present invention further provides an obstacle recognition apparatus, the apparatus including:
an information obtaining module, configured to obtain hue information, a number of exposed state pixels, and a number of non-exposed state white pixels of a candidate weeding region image;
a histogram generation module, configured to generate a hue histogram of the candidate weeding region image according to the hue information, and obtain peak information of the hue histogram, where the peak information includes: a hue value of a sudden change peak point and a peak value of the sudden change peak point;
an information determination module, configured to determine target pixel position information and target pixel value information of the candidate weeding region image according to the hue value of the sudden change peak point;
a pixel quantity determination module, configured to determine a quantity of hue valid pixels in a preset hue interval in the candidate weeding region image; and
an obstacle determination module, configured to determine whether there is an exposed region in the candidate weeding region image according to the number of exposed state pixels, the number of non-exposed state white pixels, the peak value of the sudden change peak point, the target pixel position information, the target pixel value information, and the quantity of hue valid pixels, to determine whether there is an obstacle in the candidate weeding region image.

In a third aspect, an embodiment of the present invention further provides an electronic device, the electronic device including:
one or more processors; and
a storage apparatus, configured to store one or more programs, where
the one or more programs, when executed by the one or more processors, enable the one or more processors to implement the foregoing obstacle recognition method.

In a fourth aspect, an embodiment of the present invention further provides a computer-readable storage medium, storing a computer program, where when the program is executed by a processor, the foregoing obstacle recognition method is implemented.

In a fifth aspect, an embodiment of the present invention further provides a weeding robot, including a robot body and the foregoing electronic device.

In the embodiments of the present invention, hue information, a number of exposed state pixels, and a number of non-exposed state white pixels of a candidate weeding region image are obtained; a hue histogram of the candidate weeding region image is generated according to the hue information, and peak information of the hue histogram is obtained, where the peak information includes: a hue value of a sudden change peak point and a peak value of the sudden change peak point; target pixel position information and target pixel value information of the candidate weeding region image are determined according to the hue value of the sudden change peak point; a quantity of hue valid pixels in a preset hue interval in the candidate weeding region image is determined; and whether there is an exposed region in the candidate weeding region image is determined according to the number of exposed state pixels, the number of non-exposed state white pixels, the peak value of the sudden change peak point, the target pixel position information, the target pixel value information, and the quantity of hue valid pixels, to determine whether there is an obstacle in the candidate weeding region image. Therefore, problems that a lot of manpower and material resources are consumed and costs are increased because boundaries of weeding regions of weeding robots are generally calibrated by burying boundary lines in existing technologies are solved. A problem that the shape of a weeding region is limited to some extent due to limitations on the burying of the boundary lines is solved, and recognition efficiency and accuracy of obstacles in a candidate weeding region of a weeding robot are improved.

### Brief Description of the Drawings

FIG. 1 is a flowchart of an obstacle recognition method provided in Embodiment 1 of the present invention;
FIG. 2 is a flowchart of an obstacle recognition method provided in Embodiment 2 of the present invention;
FIG. 3 is a schematic structural diagram of an obstacle recognition apparatus provided in Embodiment 3 of the present invention; and
FIG. 4 is a schematic structural diagram of an electronic device provided in Embodiment 4 of the present invention.

### Detailed Description of the Embodiments

The present invention will be further described in detail below with reference to the accompanying drawings and embodiments. It should be understood that the specific embodiments described herein are merely used for explaining the present invention, rather than limiting the present invention. In addition, it should be noted that, for the convenience of description, only some structures related to the present invention, not all structures, are shown in the accompanying drawings.

### Embodiment 1

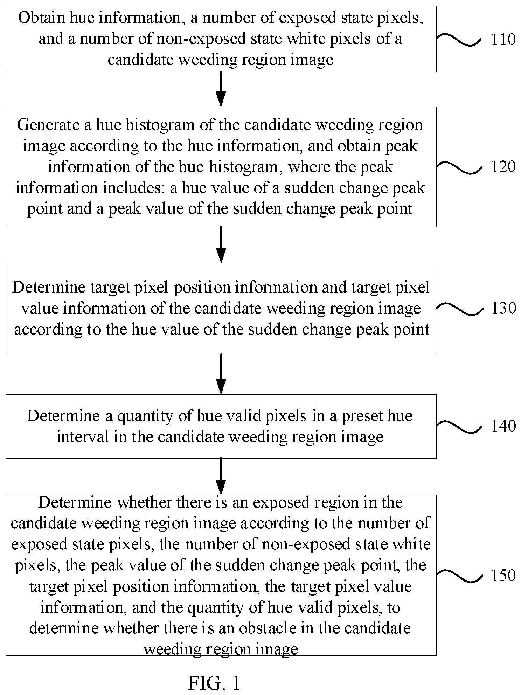

FIG. 1 is a flowchart of an obstacle recognition method provided in Embodiment 1 of the present invention. This embodiment may be applied to a situation where a weeding robot recognizes obstacles in a candidate weeding region. The method may be performed by an obstacle recognition apparatus provided in an embodiment of the present invention, and the apparatus may be implemented by software and/or hardware. With reference to FIG. 1, the obstacle recognition method provided in this embodiment includes:
Step 110: Obtain hue information, a number of exposed state pixels, and a number of non-exposed state white pixels of a candidate weeding region image, where the number of exposed state pixels and the number of non-exposed state white pixels include: the number of pixels in an exposed state and the number of white pixels in a non-exposed state.

The candidate weeding region is a region in which a weeding robot may work and in which all weeds may be to be removed, namely, a weeding region; or the candidate weeding region may have obstacles or boundaries.

The candidate weeding region image may be captured by a camera installed on the weeding robot, and is not limited in this embodiment. The hue information of the candidate weeding region image is the hue feature of the overall candidate weeding region image. A hue channel image of the candidate weeding region image may be obtained to obtain hue related information in the image, for example, a hue value of each pixel in the image. This embodiment does not limit this.

The number of exposed state pixels is the number of pixels in an exposed state in the candidate weeding region image. The number of exposed state pixels is obtained according to values of pixels in the candidate weeding region image by obtaining a value channel image of the candidate weeding region image and collecting statistics on the number of pixels with values greater than or equal to a preset threshold, such as 255, as the number of exposed state pixels.

The number of non-exposed state white pixels is obtained according to the value and hue of pixels in the candidate weeding region image by obtaining the value channel image and a hue channel image of the candidate weeding region image and collecting statistics on the number of pixels in the value channel image with values less than the preset threshold, such as 255, and the number of pixels in the hue channel image with hue values less than or equal to a preset threshold, such as 0, as the number of non-exposed state white pixels.

Step 120: Generate a hue histogram of the candidate weeding region image according to the hue information, and obtain peak information of the hue histogram, where the peak information includes: a hue value of a sudden change peak point and a peak value of the sudden change peak point.

The hue histogram is used for intuitively reflecting the hue information of pixels in the candidate weeding region image. Abscissas of the hue histogram may represent the hue values, and ordinates may represent frequencies, namely, numbers of pixels at the hue values in the candidate weeding region image, to reflect hue distribution of pixels in the candidate weeding region image.

The sudden change peak point is a point in the hue histogram that has a sudden change frequency. The peak value of the sudden change peak point is a frequency corresponding to the sudden change peak point, and the hue value of the sudden change peak point is a hue value corresponding to the sudden change peak point.

In this embodiment, optionally, the generating a hue histogram of the candidate weeding region image according to the hue information, and obtaining peak information of the hue histogram includes:
performing histogram statistics on the hue information to generate the hue histogram of the candidate weeding region image; and
determining the sudden change peak point according to differences between adjacent frequencies in the hue histogram, and obtaining the peak information of the sudden change peak point.

The hue histogram of the candidate weeding region image is obtained by performing histogram statistics on the hue information of pixels in the candidate weeding region image. For example, the hue histogram may reflect frequencies of hue values of all pixels in the candidate weeding region image. This embodiment does not limit this. The differences between the adjacent frequencies in the hue histogram are obtained, the point with maximum frequency difference from left and right adjacent frequencies is determined as the sudden change peak point, that is, the frequency at this hue value suddenly changes relative to the frequencies corresponding to adjacent hue values, and the hue value and peak value corresponding to this sudden change peak point are determined as the peak information of the hue histogram.

The sudden change peak point is determined according to the differences between the adjacent frequencies in the hue histogram, that is, the point having sudden change in the hue histogram is determined, thereby improving accuracy of obtaining the sudden change peak point, to improve accuracy of subsequently determining whether there is an exposed region in the candidate weeding region image.

Step 130: Determine target pixel position information and target pixel value information of the candidate weeding region image according to the hue value of the sudden change peak point.

Target pixels are determined according to the hue value of the sudden change peak point in the candidate weeding region image, the target pixel position information is integrated position information obtained after processing position information of all the target pixels, and the target pixel value information is integrated value information obtained after processing value information of all the target pixels.

In this embodiment, optionally, the determining target pixel position information and target pixel value information of the candidate weeding region image according to the hue value of the sudden change peak point includes:
determining target pixels according to the hue value of the sudden change peak point;
determining the target pixel position information of the candidate weeding region image according to the target pixels and position information of the target pixels; and
determining the target pixel value information of the candidate weeding region image according to the target pixels and value information of the target pixels.

Determining target pixels according to the hue value of the sudden change peak point may be determining all pixels with hue values being the hue value of the sudden change peak point in the candidate weeding region image as the target pixels.

The target pixel position information of the candidate weeding region image is determined according to the target pixels and the position information of the target pixels. For example, if the position information is the coordinates of the target pixels, the target pixel position information may be an average position of the target pixels, that is, an average value of total y-axis coordinate values of all the target pixels. This embodiment does not limit this.

The target pixel value information of the candidate weeding region image is determined according to the target pixels and the value information of the target pixels. For example, if the value information of the target pixels is the values of the pixels, the target pixel value information may be an average value of the target pixels, that is, an average value of total values of all the target pixels. This embodiment does not limit this.

The target pixels are determined through the hue value of the sudden change peak point to determine the target pixel position information and the target pixel value information, thereby improving pertinence of obtaining the target pixel position information and the target pixel value information, and further improving the accuracy of subsequently determining whether there is an exposed region in the candidate weeding region image.

Step 140: Determine a quantity of hue valid pixels in a preset hue interval in the candidate weeding region image.

The preset hue interval may be [15, 95], and is not limited in this embodiment. If pixels with hue values in the preset hue interval in the candidate weeding region image are selected as hue valid pixels, the number of hue valid pixels is the quantity of hue valid pixels.

Step 150: Determine whether there is an exposed region in the candidate weeding region image according to the number of exposed state pixels, the number of non-exposed state white pixels, the peak value of the sudden change peak point, the target pixel position information, the target pixel value information, and the quantity of hue valid pixels, to determine whether there is an obstacle in the candidate weeding region image.

The value information of the candidate weeding region image, the quantity of hue valid pixels, the target pixel position information, the target pixel value information, and the peak value of the sudden change peak point in the hue histogram are compared with preset information determination conditions. The preset information determination conditions are related to the value information, the peak value of the sudden change peak point, the target pixel position information, the target pixel value information, and the quantity of hue valid pixels. If the preset information determination conditions are satisfied, it is determined that the suspected obstacle region in the candidate weeding region image is a lawn region in which the candidate weeding region image is exposed by strong light, not an obstacle region, to prevent a weeding robot from misjudging the lawn illuminated by strong light as an obstacle or boundary.

In the technical solution provided in this embodiment, hue information, a number of exposed state pixels, and a number of non-exposed state white pixels of a candidate weeding region image are obtained; a hue histogram of the candidate weeding region image is generated according to the hue information, and peak information of the hue histogram is obtained, where the peak information includes: a hue value of a sudden change peak point and a peak value of the sudden change peak point; target pixel position information and target pixel value information of the candidate weeding region image are determined according to the hue value of the sudden change peak point; a quantity of hue valid pixels in a preset hue interval in the candidate weeding region image is determined; and whether there is an exposed region in the candidate weeding region image is determined according to the number of exposed state pixels, the number of non-exposed state white pixels, the peak value of the sudden change peak point, the target pixel position information, the target pixel value information, and the quantity of hue valid pixels, to determine whether there is an obstacle in the candidate weeding region image, thereby solving problems that a lot of manpower and material resources are consumed and costs are increased because boundaries of weeding regions of weeding robots are generally calibrated by burying boundary lines in existing technologies. In addition, a problem that the shape of a weeding region is limited to some extent due to limitations on the burying of the boundary lines is solved, and recognition efficiency and accuracy of obstacles in a candidate weeding region of a weeding robot are improved.

### Embodiment 2

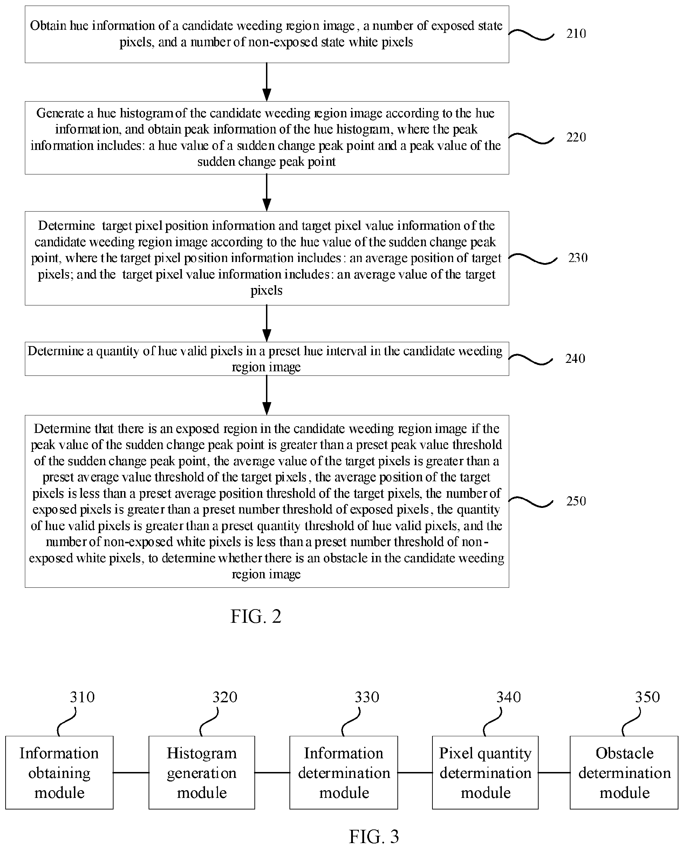

FIG. 2 is a flowchart of an obstacle recognition method provided in Embodiment 2 of the present invention. This technical solution supplements the process of determining whether there is an exposed region in the candidate weeding region image according to the number of exposed state pixels, the number of non-exposed state white pixels, the peak value of the sudden change peak point, the target pixel position information, the target pixel value information, and the quantity of hue valid pixels. Compared with the foregoing solution, specific optimization of this solution is as follows. The determining whether there is an exposed region in the candidate weeding region image according to the number of exposed state pixels, the number of non-exposed state white pixels, the peak value of the sudden change peak point, the target pixel position information, the target pixel value information, and the quantity of hue valid pixels includes:
determining that there is an exposed region in the candidate weeding region image if the peak value of the sudden change peak point is greater than a preset peak value threshold of the sudden change peak point, an average value of the target pixels is greater than a preset average value threshold of the target pixels, an average position of the target pixels is less than a preset average position threshold of the target pixels, the number of exposed state pixels is greater than a preset number threshold of exposed state pixels, the quantity of hue valid pixels is greater than a preset quantity threshold of hue valid pixels, and the number of non-exposed state white pixels is less than a preset number threshold of non-exposed state white pixels. Specifically, the flowchart of the obstacle recognition method is shown in FIG. 2.

Step 210: Obtain hue information, a number of exposed state pixels, and a number of non-exposed state white pixels of a candidate weeding region image.

Step 220: Generate a hue histogram of the candidate weeding region image according to the hue information, and obtain peak information of the hue histogram, where the peak information includes: a hue value of a sudden change peak point and a peak value of the sudden change peak point.

Step 230: Determine target pixel position information and target pixel value information of the candidate weeding region image according to the hue value of the sudden change peak point, where the target pixel position information includes: an average position of target pixels; and the target pixel value information includes: an average value of the target pixels.

Step 240: Determine a quantity of hue valid pixels in a preset hue interval in the candidate weeding region image.

Step 250: Determine that there is an exposed region in the candidate weeding region image if the peak value of the sudden change peak point is greater than a preset peak value threshold of the sudden change peak point, the average value of the target pixels is greater than a preset average value threshold of the target pixels, the average position of the target pixels is less than a preset average position threshold of the target pixels, the number of exposed state pixels is greater than a preset number threshold of exposed state pixels, the quantity of hue valid pixels is greater than a preset quantity threshold of hue valid pixels, and the number of non-exposed state white pixels is less than a preset number threshold of non-exposed state white pixels, to determine whether there is an obstacle in the candidate weeding region image.

For example, the peak value of the sudden change peak point is denoted as single V, the average value of the target pixels is denoted as Vs, the average position of the target pixels is denoted as is, the number of exposed state pixels is denoted as overbrightPix, the quantity of hue valid pixels is denoted as vaildPixels, and the number of non-exposed state white pixels is denoted as zeroPix. It is assumed that the preset peak value threshold of the sudden change peak point is 500, the preset average value threshold of the target pixels is 200, the preset average position threshold of the target pixels is 40, the preset number threshold of exposed state pixels is 30, the preset quantity threshold of hue valid pixels is 16000, and the preset number threshold of non-exposed state white pixels is 100.

The preset information determination conditions are 500<singleV, Vs>200, is<40, overrightPix>30, vaildPixel>16000, and zeroPix<100. The preset information determination conditions may be adjusted according to specific determination scenarios, and are not limited in this embodiment. When the conditions are satisfied, it is determined that there is an exposed region in the candidate weeding region image. At this point, the suspected obstacle region in the candidate weeding region image is an exposed region subjected to overexposure by strong light due to the fact that when a weeding robot moves from dark to strong light, a camera is automatically adjusted according to the light, but the adjustment requires some response time, and the light and dark contrast is strong at this time, rather than an obstacle region.

In this embodiment, optionally, the determining whether there is an obstacle in the candidate weeding region image includes:
obtaining a hue segmentation image of the candidate weeding region image according to a preset hue segmentation interval if there is the exposed region; and
determining whether there is an obstacle in the candidate weeding region image according to the hue segmentation image.

The preset hue segmentation interval may be [15, 95], and is not limited in this embodiment. The hue segmentation image of the candidate weeding region image is obtained according to the preset hue segmentation interval. For example, pixels with hue values in the preset hue segmentation interval in the candidate weeding region image are converted into white, and other pixels are converted into black, to obtain the hue segmentation image. The white region represents a lawn region, and the black region represents a non-lawn region. Whether there is an obstacle in the candidate weeding region image may be determined according to the hue segmentation image by comparing the non-lawn region with the exposed region. If the two are consistent, it is determined that there are no obstacles in the candidate weeding region image. Alternatively, the exposed region is directly used as a non-obstacle region to improve accuracy of image segmentation. This embodiment does not limit this. The exposed region is prevented from being determined as an obstacle region to improve accuracy of obstacle determination.

In this embodiment of the present invention, whether there is an exposed region in the candidate weeding region image is determined through the peak value of the sudden change peak point, the average value of the target pixels, the average position of the target pixels, the number of exposed state pixels, the quantity of hue valid pixels, and the number of non-exposed state white pixels, to determine whether there is an obstacle in the candidate weeding region image, thereby effectively recognizing a lawn region illuminated by strong light, preventing a robot from misjudging a lawn illuminated by strong light as white or highly reflective obstacles or boundaries, and improving accuracy of obstacle recognition. In addition, the speed of the robot does not need to be reduced to wait for camera adjustment, and an advanced camera module is not needed, thereby reducing the manufacturing cost of the robot.

### Embodiment 3

FIG. 3 is a schematic structural diagram of an obstacle recognition apparatus provided in Embodiment 3 of the present invention. The apparatus may be implemented by hardware and/or software, may perform the obstacle recognition method provided in any embodiment of the present invention, and has corresponding functional modules for performing the method and beneficial effects. As shown in FIG. 3, the apparatus includes:
an information obtaining module 310, configured to obtain hue information, a number of exposed state pixels, and a number of non-exposed state white pixels of a candidate weeding region image;
a histogram generation module 320, configured to generate a hue histogram of the candidate weeding region image according to the hue information, and obtain peak information of the hue histogram, where the peak information includes: a hue value of a sudden change peak point and a peak value of the sudden change peak point;
an information determination module 330, configured to determine target pixel position information and target pixel value information of the candidate weeding region image according to the hue value of the sudden change peak point;
a pixel quantity determination module 340, configured to determine a quantity of hue valid pixels in a preset hue interval in the candidate weeding region image; and
an obstacle determination module 350, configured to determine whether there is an exposed region in the candidate weeding region image according to the number of exposed state pixels, the number of non-exposed state white pixels, the peak value of the sudden change peak point, the target pixel position information, the target pixel value information, and the quantity of hue valid pixels, to determine whether there is an obstacle in the candidate weeding region image.

In this embodiment of the present invention, hue information, a number of exposed state pixels, and a number of non-exposed state white pixels of a candidate weeding region image are obtained; a hue histogram of the candidate weeding region image is generated according to the hue information, and peak information of the hue histogram is obtained, where the peak information includes: a hue value of a sudden change peak point and a peak value of the sudden change peak point; target pixel position information and target pixel value information of the candidate weeding region image are determined according to the hue value of the sudden change peak point; a quantity of hue valid pixels in a preset hue interval in the candidate weeding region image is determined; and whether there is an exposed region in the candidate weeding region image is determined according to the number of exposed state pixels, the number of non-exposed state white pixels, the peak value of the sudden change peak point, the target pixel position information, the target pixel value information, and the quantity of hue valid pixels, to determine whether there is an obstacle in the candidate weeding region image. Therefore, problems that a lot of manpower and material resources are consumed and costs are increased because boundaries of weeding regions of weeding robots are generally calibrated by burying boundary lines in existing technologies are solved. A problem that the shape of a weeding region is limited to some extent due to limitations on the burying of the boundary lines is solved, and recognition efficiency and accuracy of obstacles in a candidate weeding region of a weeding robot are improved.

On the basis of the foregoing technical solutions, optionally, the histogram generation module includes:
a histogram generation unit, configured to perform histogram statistics on the hue information to generate the hue histogram of the candidate weeding region image; and
a sudden change peak point determination unit, configured to determine the sudden change peak point according to differences between adjacent frequencies in the hue histogram, and obtain the peak information of the sudden change peak point.

On the basis of the foregoing technical solutions, optionally, the information determination module includes:
a target pixel determination unit, configured to determine target pixels according to the hue value of the sudden change peak point;
a target pixel position information determination unit, configured to determine the target pixel position information of the candidate weeding region image according to the target pixels and the position information the target pixels; and
a target pixel value information determination unit, configured to determine the target pixel value information of the candidate weeding region image according to the target pixels and the value information of target pixels.

On the basis of the foregoing technical solutions, optionally, the number of exposed state pixels and the number of non-exposed state white pixels include: the number of pixels in an exposed state and the number of white pixels in a non-exposed state; the target pixel position information includes: an average position of the target pixels; the target pixel value information includes: an average value of the target pixels; and
the obstacle determination module includes:
a first obstacle determination unit, configured to determine that there is an exposed region in the candidate weeding region image if the peak value of the sudden change peak point is greater than a preset peak value threshold of the sudden change peak point, the average value of the target pixels is greater than a preset average value threshold of the target pixels, the average position of the target pixels is less than a preset average position threshold of the target pixels, the number of exposed state pixels is greater than a preset number threshold of exposed state pixels, the quantity of hue valid pixels is greater than a preset quantity threshold of hue valid pixels, and the number of non-exposed state white pixels is less than a preset number threshold of non-exposed state white pixels, to determine whether there is an obstacle in the candidate weeding region image.

On the basis of the foregoing technical solutions, optionally, the obstacle determination module includes:
a hue segmentation image obtaining unit, configured to obtain a hue segmentation image of the candidate weeding region image according to a preset hue segmentation interval if there is the exposed region; and
a second obstacle determination unit, configured to determine whether there is an obstacle in the candidate weeding region image according to the hue segmentation image.

### Embodiment 4

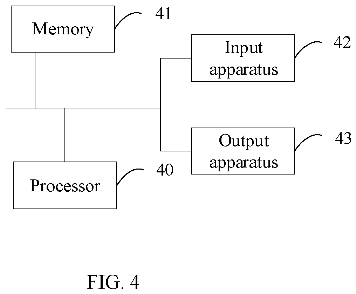

FIG. 4 is a schematic structural diagram of an electronic device provided in Embodiment 4 of the present invention. As shown in FIG. 4, the electronic device includes a processor 40, a memory 41, an input apparatus 42, and an output apparatus 43. The electronic device may include one or more processors 40. One processor 40 is used as an example in FIG. 4. The processor 40, the memory 41, the input apparatus 42, and the output apparatus 43 in the electronic device may be connected through a bus or in other ways. A bus connection is used as an example in FIG. 4.

As a computer-readable storage medium, the memory 41 may be used to store software programs, computer executable programs, and modules, such as program instructions/modules corresponding to the obstacle recognition method in the embodiments of the present invention. The processor 40 performs various functional applications of the electronic device and data processing by running the software programs, instructions, and modules stored in the memory 41, to implement the foregoing obstacle recognition method.

The memory 41 may mainly include a program storage area and a data storage area, where the program storage area may store an operating system, and an application program required for at least one function; and the data storage area may store data created according to use of a terminal, etc. In addition, the memory 41 may include a high speed random access memory, and may also include a non-volatile memory, such as at least one of a magnetic disk storage device, a flash memory, or other non-volatile solid-state storage device. In some examples, the memory 41 may further include memories arranged remotely from the processor 40, and these remote memories may be connected to the electronic device through a network. Examples of the network include, but are not limited to, the Internet, an intranet, a local area network, a mobile communications network, or a combination thereof.

### Embodiment 5

Embodiment 5 of the present invention further provides a storage medium including computer-executable instructions, the computer-executable instructions being used to perform an obstacle recognition method when executed by a computer processor, and the method including:
obtaining hue information, a number of exposed state pixels, and a number of non-exposed state white pixels of a candidate weeding region image;
generating a hue histogram of the candidate weeding region image according to the hue information, and obtaining peak information of the hue histogram, where the peak information includes: a hue value of a sudden change peak point and a peak value of the sudden change peak point;
determining target pixel position information and target pixel value information of the candidate weeding region image according to the hue value of the sudden change peak point;
determining a quantity of hue valid pixels in a preset hue interval in the candidate weeding region image; and
determining whether there is an exposed region in the candidate weeding region image according to the number of exposed state pixels, the number of non-exposed state white pixels, the peak value of the sudden change peak point, the target pixel position information, the target pixel value information, and the quantity of hue valid pixels, to determine whether there is an obstacle in the candidate weeding region image.

Of course, the computer-executable instructions included in the storage medium provided in the embodiment of the present invention are not limited to the foregoing method operations, but may also be used for performing related operations in the obstacle recognition method provided in any embodiment of the present invention.

From the above description of the embodiments, those skilled in the art may clearly understand that the present invention may be implemented by means of software and necessary general-purpose hardware, and of course may also be implemented by hardware, but the former is better in many cases. Based on such an understanding, the technical solution of the present invention substantially, or the part of the present invention making contribution to the prior art may be embodied in the form of a software product, and the computer software product may be stored in a computer-readable storage medium, such as a floppy disk of a computer, a read-only memory (ROM), a random access memory (RAM), a flash, a hard disk or a CD, including a number of instructions enabling a computer device (which may be a personal computer, a server, or a network communication device) to perform the method described in each embodiment of the present invention.

It is worth noting that, in the foregoing embodiment of the obstacle recognition apparatus, the included units and modules are only divided according to functional logics, but are not limited to the foregoing division, as long as the corresponding functions can be implemented. In addition, the specific names of the functional units are only for the convenience of distinguishing from each other, and are not used to limit the protection scope of the present invention.

### Embodiment 6

Embodiment 6 of the present invention provides a weeding robot, including a robot body and the electronic device described in any embodiment of the present invention.

Specifically, the electronic device installed on the weeding robot may perform related operations of the obstacle recognition method described in any embodiment of the present invention.

The robot body may include a left driving wheel and a right driving wheel, which may be driven by motors separately. The motors may be brushless motors with a gearbox and a Hall sensor. The robot body controls the speed and direction of the two driving wheels to implement forward, backward, turning, and arc driving operations. The robot body further includes a universal wheel, a camera, and a rechargeable battery, where the universal wheel plays a supporting and balancing role. The camera is installed at a designated position of the robot and is at a preset angle to a horizontal direction to capture a candidate weeding region image. The rechargeable battery is used to provide power for the robot to work.

It should be noted that the above are only preferred embodiments of the present invention and applied technical principles. Those skilled in the art may understand that the present invention is not limited to the specific embodiments described herein, and various obvious changes, readjustments and substitutions can be made by those skilled in the art without departing from the protection scope of the present invention. Therefore, although the present invention is described in detail through the above embodiments, the present invention is not limited to the above embodiments, and may further include more other equivalent embodiments without departing from the concept of the present invention. The scope of the present invention is determined by the scope of the appended claims.

## Claims

1. An obstacle recognition method, comprising:
obtaining hue information, a number of exposed state pixels, and a number of non-exposed state white pixels of a candidate weeding region image;
generating a hue histogram of the candidate weeding region image according to the hue information, and obtaining peak information of the hue histogram, wherein the peak information comprises: a hue value of a sudden change peak point and a peak value of the sudden change peak point;
determining target pixel position information and target pixel value information of the candidate weeding region image according to the hue value of the sudden change peak point;
determining a quantity of hue valid pixels in a preset hue interval in the candidate weeding region image; and
determining whether there is an exposed region in the candidate weeding region image according to the number of exposed state pixels, the number of non-exposed state white pixels, the peak value of the sudden change peak point, the target pixel position information, the target pixel value information, and the quantity of hue valid pixels, to determine whether there is an obstacle in the candidate weeding region image.

2. The method according to claim 1, wherein the generating a hue histogram of the candidate weeding region image according to the hue information, and obtaining peak information of the hue histogram comprises:
performing histogram statistics on the hue information to generate the hue histogram of the candidate weeding region image; and
determining the sudden change peak point according to differences between adjacent frequencies in the hue histogram, and obtaining the peak information of the sudden change peak point.

3. The method according to claim 1, wherein the determining target pixel position information and target pixel value information of the candidate weeding region image according to the hue value of the sudden change peak point comprises:
determining target pixels according to the hue value of the sudden change peak point;
determining the target pixel position information of the candidate weeding region image according to the target pixels and position information of the target pixels; and
determining the target pixel value information of the candidate weeding region image according to the target pixels and value information of the target pixels.

4. The method according to any one of claims 1-3, wherein the target pixel position information comprises: an average position of the target pixels; the target pixel value information comprises: an average value of the target pixel; and
the determining whether there is an exposed region in the candidate weeding region image according to the number of exposed state pixels, the number of non-exposed state white pixels, the peak value of the sudden change peak point, the target pixel position information, the target pixel value information, and the quantity of hue valid pixels comprises:
determining that there is the exposed region in the candidate weeding region image if the peak value of the sudden change peak point is greater than a preset peak value threshold of the sudden change peak point, the average value of the target pixels is greater than a preset average value threshold of the target pixels, the average position of the target pixels is less than a preset average position threshold of the target pixels, the number of exposed state pixels is greater than a preset number threshold of exposed state pixels, the quantity of hue valid pixels is greater than a preset quantity threshold of hue valid pixels, and the number of non-exposed state white pixels is less than a preset number threshold of non-exposed state white pixels.

5. The method according to claim 1, wherein the determining whether there is an obstacle in the candidate weeding region image comprises:
obtaining a hue segmentation image of the candidate weeding region image according to a preset hue segmentation interval if there is the exposed region; and
determining whether there is the obstacle in the candidate weeding region image according to the hue segmentation image.

6. An obstacle recognition apparatus, comprising:
an information obtaining module, configured to obtain hue information, a number of exposed state pixels, and a number of non-exposed state white pixels of a candidate weeding region image;
a histogram generation module, configured to generate a hue histogram of the candidate weeding region image according to the hue information, and obtain peak information of the hue histogram, wherein the peak information comprises: a hue value of a sudden change peak point and a peak value of the sudden change peak point;
an information determination module, configured to determine target pixel position information and target pixel value information of the candidate weeding region image according to the hue value of the sudden change peak point;
a pixel quantity determination module, configured to determine a quantity of hue valid pixels in a preset hue interval in the candidate weeding region image; and
an obstacle determination module, configured to determine whether there is an exposed region in the candidate weeding region image according to the number of exposed state pixels, the number of non-exposed state white pixels, the peak value of the sudden change peak point, the target pixel position information, the target pixel value information, and the quantity of hue valid pixels, to determine whether there is an obstacle in the candidate weeding region image.

7. The apparatus according to claim 6, wherein the histogram generation module comprises:
a histogram generation unit, configured to perform histogram statistics on the hue information to generate the hue histogram of the candidate weeding region image; and
a sudden change peak point determination unit, configured to determine the sudden change peak point according to differences between adjacent frequencies in the hue histogram, and obtain the peak information of the sudden change peak point.

8. An electronic device, comprising:
one or more processors; and
a storage apparatus, configured to store one or more programs, wherein
the one or more programs, when executed by the one or more processors, enable the one or more processors to implement the obstacle recognition method according to any one of claims 1-5.

9. A computer-readable storage medium, storing a computer program, wherein when the program is executed by a processor, the obstacle recognition method according to any one of claims 1-5 is implemented.

10. A weeding robot, comprising a robot body and the electronic device according to claim 8.
